# EUROPEAN PATENT APPLICATION

(11) **EP 4 435 914 A2**
(43) Date of publication of application: **25.09.2024**
(21) Application number: 24160445.3
(22) Date of filing: 29.02.2024
(51) Int. Cl.: H01M 10/04, H01M 10/613, H01M 10/625, H01M 10/647, H01M 10/6555, H01M 10/6557, H01M 50/209, H01M 50/242, H01M 50/249, H01M 50/262, H01M 50/291

(54) **BATTERY PACK**

(30) Priority: 24.03.2023 JP 2023047934
(71) Applicant: Prime Planet Energy & Solutions, Inc., Chuo-ku Tokyo 103-0022 (JP)
(72) Inventor: MORISHITA, Taijyu, Tokyo, 103-0022 (JP)
(74) Representative: Kuhnen & Wacker Patent- und Rechtsanwaltsbüro PartG mbB

(57) **Abstract**

A battery pack (1) includes a stack (10), an end plate (200), a housing (400), and a strength member (500). The stack (10) includes a plurality of battery cells (100) arranged side by side in a first direction. The end plate (200) is disposed at an end portion of the stack (10) in the first direction. The housing (400) accommodates the stack (10) and the end plate (200). The strength member (500) is disposed inside the housing (400) and is fitted to the end plate (200), the strength member (500) bearing at least part of a collision load received by the battery pack (1) at a time of collision.

The strength member (500) includes a first portion (510) and a second portion (520). The first portion (510) is disposed on a side of the end plate (200) opposite to the stack (10) in the first direction. The second portion (520) is arranged side by side with the end plate (200) and the housing (400) in a second direction orthogonal to the first direction.

## Description

### CROSS REFERENCE TO RELATED APPLICATIONS

This nonprovisional application is based on Japanese Patent Application No. 2023-047934 filed on March 24, 2023 with the Japan Patent Office, the entire contents of which are hereby incorporated by reference.

### BACKGROUND OF THE INVENTION

### Field of the Invention

The present technology relates to a battery pack.

### Description of the Background Art

Japanese Patent Laying-Open No. 2017-197047 is a prior art document that discloses a battery mounting structure of a vehicle. The battery mounting structure of the vehicle as described in Japanese Patent Laying-Open No. 2017-197047 includes a pair of frame members and a battery pack. The battery pack is disposed between the pair of frame members. The battery pack includes a stack and a case. In the stack, a plurality of cells are stacked in one direction and are integrated. The case accommodates a plurality of the stacks arranged with a space being interposed therebetween in a vehicle width direction. Inside the case, a load transmission member for transmitting, in the vehicle width direction, a shock load input at the time of collision of the vehicle is provided in a clearance between the stacks.

### SUMMARY OF THE INVENTION

When the battery pack is provided with a structure for protecting the battery cells from collision, the structure of the battery pack may become complicated. Therefore, there is room for improvement in protecting the battery cells from collision while simplifying the structure of the battery pack.

The present technology has been made to solve the above-described problem and has an object to provide a battery pack to protect battery cells from collision while simplifying its structure.

The present technology provides the following battery pack.
[1] A battery pack comprising:
   a stack including a plurality of battery cells arranged side by side in a first direction;
   an end plate disposed at an end portion of the stack in the first direction;
   a housing that accommodates the stack and the end plate; and
   a strength member disposed inside the housing and fitted to the end plate, the strength member bearing at least part of a collision load received by the battery pack at a time of collision, wherein
   the strength member includes
      a first portion disposed on a side of the end plate opposite to the stack in the first direction, and
      a second portion arranged side by side with the end plate and the housing in a second direction orthogonal to the first direction.
[2] The battery pack according to [1], wherein the second portion is disposed on each of both sides beside each of the end plate and the first portion in the second direction.
[3] The battery pack according to [2], wherein both sides of the end plate in the second direction are fitted to the second portion.
[4] The battery pack according to any one of [1] to [3], wherein a width of the first portion is larger than a width of the end plate in the first direction.
[5] The battery pack according to any one of [1] to [4], wherein the end plate is in contact with the first portion.
[6] The battery pack according to any one of [1] to [5], wherein the strength member is fixed to the housing.
[7] The battery pack according to any one of [1] to [6], wherein the second portion is formed by a pipe having an axial direction in a third direction orthogonal to the first direction and the second direction.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a configuration of a battery pack according to a first embodiment of the present technology.
Fig. 2 is a perspective view showing a configuration of a battery module included in the battery pack according to the first embodiment of the present technology.
Fig. 3 is a perspective view showing configurations of battery cells and end plates included in the battery pack according to the first embodiment of the present technology.
Fig. 4 is a perspective view showing a configuration of each battery cell included in the battery pack according to the first embodiment of the present technology.
Fig. 5 is a cross sectional view of the battery pack of Fig. 1 when viewed in a direction of arrow of a line V-V.
Fig. 6 is a perspective view showing a configuration of a strength member included in the battery pack according to the first embodiment of the present technology.
Fig. 7 is a cross sectional view showing a configuration of a battery pack according to a first modification of the first embodiment of the present technology.
Fig. 8 is a cross sectional view showing a configuration of a battery pack according to a second modification of the first embodiment of the present technology.
Fig. 9 is a perspective view showing a configuration of a strength member included in a battery pack according to a second embodiment of the present technology.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly.

It should be noted that in the present specification, the terms "comprise", "include", and "have" are open-end terms. That is, when a certain configuration is included, a configuration other than the foregoing configuration may or may not be included. Further, the present technology is not limited to one that necessarily exhibits all the functions and effects stated in the present embodiment.

In the present specification, the term "battery" is not limited to a lithium ion battery, and may include another battery such as a nickel-metal hydride battery. In the present specification, the term "electrode" may collectively represent a positive electrode and a negative electrode.

In the present specification, the "battery cell" or the "battery module" can include a capacitor cell or a capacitor module.

It should be noted that in each of the figures, it is defined that: an X direction serving as a second direction represents a direction in which an end plate, a housing and a second portion of a strength member are arranged side by side, the direction being orthogonal to a direction in which battery cells are arranged; a Y direction serving as a first direction represents the direction in which the battery cells are arranged; and a Z direction serving as a third direction represents a height direction of each of the battery cells, the height direction being orthogonal to the first direction and the second direction.

### (First Embodiment)

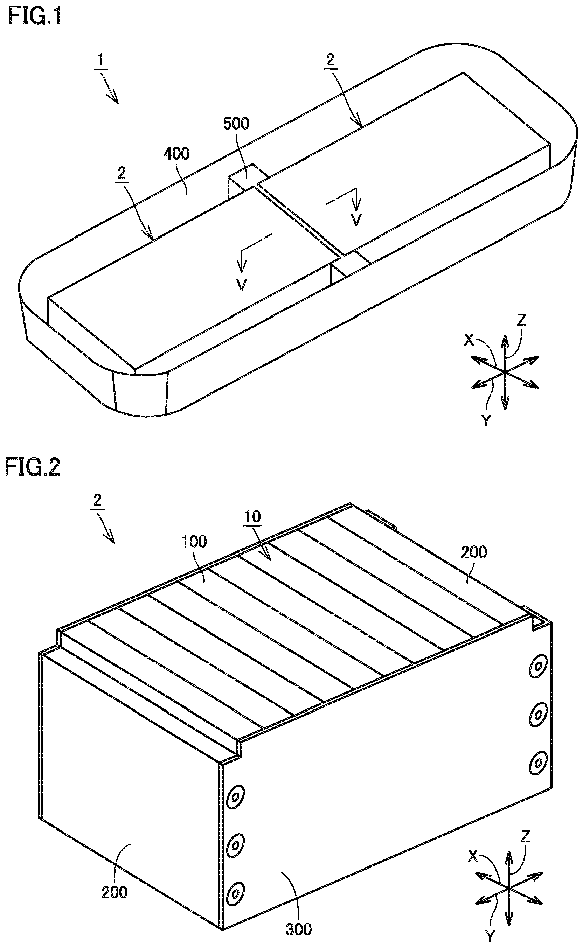

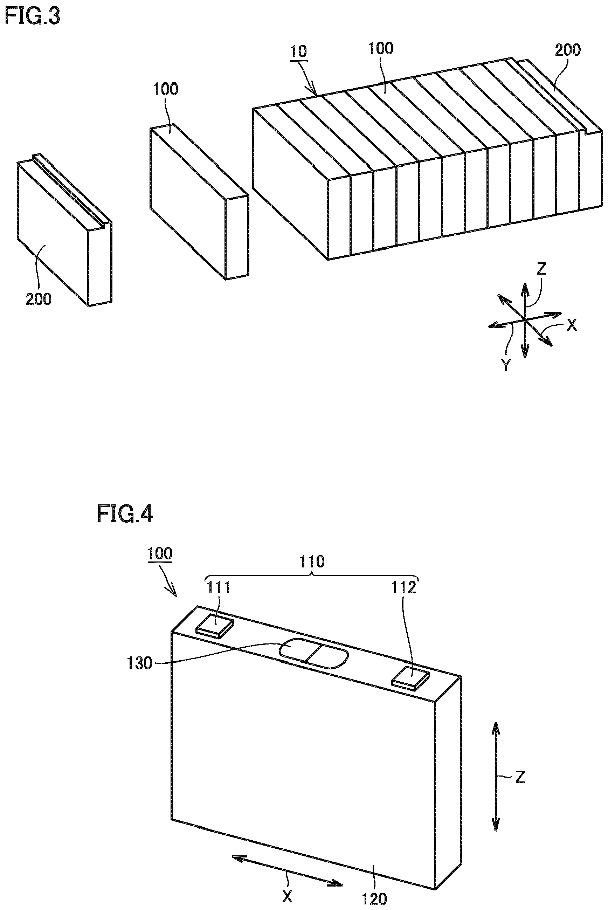

Fig. 1 is a perspective view showing a configuration of a battery pack according to a first embodiment of the present technology. Fig. 2 is a perspective view showing a configuration of a battery module included in the battery pack according to the first embodiment of the present technology. Fig. 3 is a perspective view showing configurations of battery cells and end plates included in the battery pack according to the first embodiment of the present technology.

As shown in Figs. 1 and 2, a battery pack 1 according to the present embodiment includes battery modules 2, a housing 400, and a strength member 500.

As shown in Figs. 2 and 3, each of battery modules 2 each serving as an battery assembly includes a stack 10, end plates 200, and restraint members 300.

Stack 10 has a plurality of battery cells 100 arranged side by side in the first direction (Y direction). A separator (not shown) is interposed between battery cells 100. The plurality of battery cells 100, which are sandwiched between two end plates 200, are pressed by end plates 200, and are therefore restrained between two end plates 200.

End plates 200 are disposed at end portions of stack 10 in the first direction (Y direction). End plates 200 in the present embodiment are disposed at both ends of stack 10 in the first direction (Y direction). Each of end plates 200 is fixed to a base such as a case that accommodates battery module 2. A stepped portion is provided at an end portion of end plate 200 in the Z direction on a side opposite to battery cells 100 in the Y direction. End plate 200 is composed of, for example, aluminum or iron.

As shown in Fig. 2, restraint members 300 are provided at both ends of each of stack 10 and end plate 200 in the X direction. When each of restraint members 300 is engaged with end plates 200 with compressive force in the Y direction being applied to the plurality of stacked battery cells 100 and end plates 200 and then the compressive force is released, tensile force acts on restraint member 300 that connects two end plates 200. As a reaction thereto, restraint member 300 presses two end plates 200 in directions of bringing them closer to each other. As a result, restraint member 300 restrains stack 10 in the Y direction.

Fig. 4 is a perspective view showing a configuration of each battery cell included in the battery pack according to the first embodiment of the present technology. As shown in Fig. 4, battery cell 100 includes electrode terminals 110, an exterior package 120, and a gas-discharge valve 130.

Electrode terminals 110 include a positive electrode terminal 111 and a negative electrode terminal 112. Electrode terminals 110 are formed on exterior package 120. Exterior package 120 is formed to have a substantially rectangular parallelepiped shape. An electrode assembly (not shown) and an electrolyte solution (not shown) are accommodated in exterior package 120. Gas-discharge valve 130 is fractured when pressure inside exterior package 120 becomes equal to or more than a predetermined value. Thus, gas in exterior package 120 is discharged to the outside of exterior package 120.

As shown in Fig. 1, housing 400 accommodates stacks 10 and end plates 200. Housing 400 of the present embodiment accommodates two battery modules 2, which each include stack 10 and end plates 200 and are arranged side by side in the Y direction.

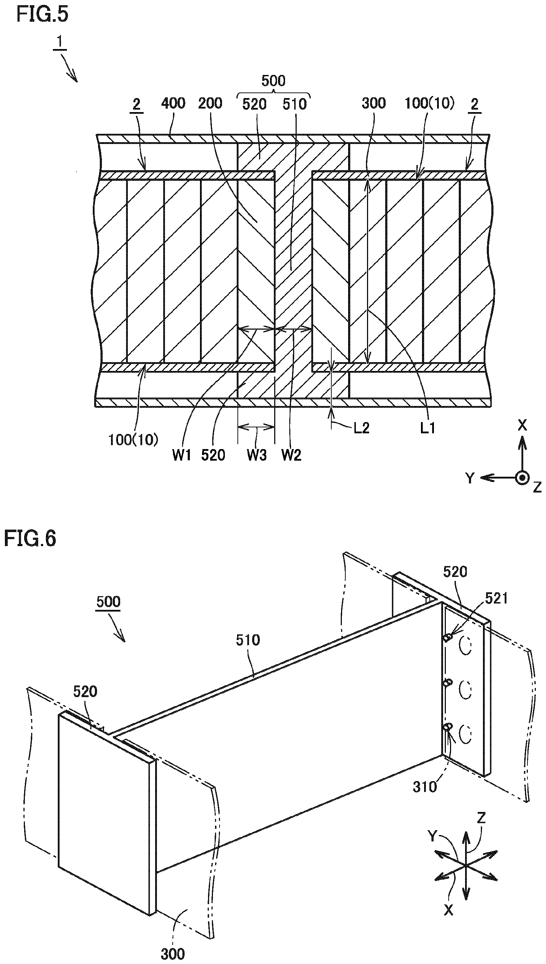

Fig. 5 is a cross sectional view of the battery pack of Fig. 1 when viewed in a direction of arrow of a line V-V. As shown in Figs. 1 and 5, strength member 500 is a member for protecting battery cells 100 in battery modules 2 when a collision load is received in the second direction (X direction) mainly due to a side collision. Therefore, strength member 500 bears at least part of the collision load received by battery pack 1 at the time of collision.

Strength member 500 is disposed inside housing 400. Specifically, strength member 500 is located between two battery modules 2 arranged side by side in the first direction (Y direction). Strength member 500 is disposed substantially at the center between the pair of side surfaces of housing 400 in the first direction (Y direction). Therefore, even when battery pack 1 has an elongated shape in the first direction (Y direction), the collision load in the second direction (X direction) can be received at equal intervals in the first direction (Y direction).

Strength member 500 is fixed to housing 400. Strength member 500 is fixed through adhesive fixation by an adhesive agent or through joining by welding or the like, for example. It should be noted that strength member 500 may not necessarily be fixed to housing 400.

Strength member 500 is composed of aluminum, for example. It should be noted that strength member 500 is not limited to being composed of aluminum, and may be composed of another metal or a high-strength resin. When strength member 500 is composed of a high-strength resin, strength member 500 is composed of CFRP, for example.

Strength member 500 includes a first portion 510 and second portions 520. The pair of second portions 520 in the present embodiment are provided on both sides beside first portion 510 in the second direction (X direction). First portion 510 and second portions 520 in the present embodiment are formed in one piece. It should be noted that strength member 500 may have such a configuration that first portion 510 and second portions 520 are formed by separate members and are joined together.

First portion 510 is a portion disposed on a side of each of end plates 200 opposite to stacks 10 in the first direction (Y direction). First portion 510 in the present embodiment is sandwiched between two battery modules 2.

Each of end plates 200 is in contact with first portion 510. End plate 200 in the present embodiment is in surface contact with first portion 510. When end plate 200 is in surface contact with first portion 510, battery module 2 including end plate 200 can be readily positioned with respect to strength member 500. It should be noted that end plate 200 may be in point contact with first portion 510 at a plurality of positions.

Each of second portions 520 is a portion arranged side by side with end plate 200 and housing 400 in the second direction (X direction) orthogonal to the first direction (Y direction). Second portions 520 are disposed on both sides beside each of end plate 200 and first portion 510 in the second direction (X direction). Each of second portions 520 in the present embodiment is disposed in contact with end plate 200 and housing 400 in the second direction (X direction).

Strength member 500 is fitted to end plate 200. Specifically, both sides of second portions 520 in the second direction (X direction) are fitted to end plate 200. Strength member 500 according to the present embodiment is fitted to end plate 200 with restraint member 300 being interposed therebetween. It should be noted that strength member 500 may be in direct contact with end plate 200 with no restraint member 300 being interposed therebetween by, for example, removing a portion of restraint member 300.

The thickness of strength member 500 is preferably relatively thin in consideration of an increase in volume of battery pack 1 due to strength member 500 being disposed in battery pack 1.

A length L2 of second portion 520 in the second direction (X direction) is, for example, 1/10 or less of a length L1 of battery cell 100 in the second direction (X direction).

A width W2 of first portion 510 in the first direction (Y direction) is, for example, substantially the same as a width W1 of end plate 200 in the first direction (Y direction). It should be noted that the expression "substantially the same" is meant to include a variation in processing at the time of manufacturing.

A portion of second portion 520 arranged side by side with end plate 200 in the second direction (X direction) has a width W3. Width W3 of second portion 520 in the first direction (Y direction) is, for example, substantially the same as width W1 of end plate 200 in the first direction (Y direction).

It should be noted that width W3 of second portion 520 is preferably smaller than width W1 of end plate 200. Specifically, width W3 of second portion 520 desirably satisfies a relation of W1≥W3≥0.5W1. Thus, when a collision load is applied in the second direction (X direction), a load of the collision load to be shared can be transmitted from second portion 520 to the entire surface of end plate 200.

In the present embodiment, when the collision load is applied to battery pack 1 due to a side collision in the second direction (X direction), the collision load can be received by end plate 200 and strength member 500 at the end portion of battery module 2 at which strength member 500 is disposed in the first direction (Y direction).

Strength member 500 according to the present embodiment and end plate 200 share the collision load substantially evenly at the end portion of battery module 2 at which strength member 500 is disposed in the first direction (Y direction). Since width W1 of end plate 200 and width W2 of first portion 510 of strength member 500 are substantially the same and width W1 of end plate 200 and width W3 of second portion 520 of strength member 500 are substantially the same, the collision load is shared substantially evenly by end plate 200 and strength member 500.

If a protective structure for receiving the collision load is provided in the housing, the following structure or the like may be employed: the housing is constituted of divided parts and a frame member for receiving the collision load is sandwiched between the divided parts of the housing. This structure has a large number of members, thus resulting in a complicated structure of the housing. Further, this leads to high cost of the battery pack as well as impaired expandability in mounting it on various vehicles or the like.

On the other hand, since the configuration in which the collision load is received by end plate 200 and strength member 500 in the present embodiment can be achieved by the simple shape and strength member 500 that can receive the collision load is disposed at the end portion of battery module 2, the structure can be simplified as compared with the case where the protective structure for receiving the collision load is provided in housing 400.

Fig. 6 is a perspective view showing the configuration of the strength member included in the battery pack according to the first embodiment of the present technology. It should be noted that each restraint member 300 is illustrated in a see-through manner in Fig. 6.

As shown in Fig. 6, restraint member 300 is provided with notch portions 310. The plurality of notch portions 310 are provided to be arranged side by side in the third direction (Z direction) at an end portion of restraint member 300 in the first direction (Y direction).

Second portion 520 includes columnar protrusions 521. Columnar protrusions 521 are provided in second portion 520 at respective positions corresponding to notch portions 310. Each of columnar protrusions 521 protrudes from second portion 520 toward the side on which first portion 510 is located in the second direction (X direction). The plurality of columnar protrusions 521 are provided to be arranged side by side in the third direction (Z direction).

Columnar protrusions 521 of strength member 500 are fitted to notch portions 310 of restraint member 300. Thus, strength member 500 is fixed to restraint member 300. Since columnar protrusions 521 and notch portions 310 are fitted, it is possible to form an integral structure in which battery module 2 including restraint member 300 and strength member 500 are fixed by such a simple configuration.

As shown in Figs. 5 and 6, since strength member 500 is fixed to housing 400, battery module 2 can be positioned with respect to housing 400. That is, the component members of battery pack 1 can be positioned by using strength member 500 as a positioning component and by sandwiching strength member 500 from both ends by battery modules 2 in the first direction (Y direction).

In battery pack 1 according to the first embodiment of the present technology, since the integral structure is attained by fitting end plate 200 and strength member 500, the collision load received by battery pack 1 at the time of side collision can be received by end plate 200 and strength member 500. Thus, battery cells 100 can be protected from the collision load while simplifying the structure of battery pack 1 as compared with the case where the protective structure for receiving the collision load is provided in housing 400. Further, since housing 400 can be simplified, the manufacturing cost of housing 400 can be reduced and the expandability in mounting battery pack 1 on various vehicles or the like can be improved.

In battery pack 1 according to the first embodiment of the present technology, since second portions 520 are disposed on the both sides beside each of end plates 200 and first portion 510 in the second direction (X direction), the collision load from housing 400 can be propagated from each second portion 520 to each end plate 200 and first portion 510 and the collision load can be readily received by both end plate 200 and strength member 500.

In battery pack 1 according to the first embodiment of the present technology, since end plate 200 is fitted to second portions 520 disposed on both sides of strength member 500 in the second direction (X direction), the collision load from strength member 500 can be efficiently propagated to end plate 200.

In battery pack 1 according to the first embodiment of the present technology, since end plates 200 are in contact with first portion 510 of strength member 500 in the first direction (Y direction), the plurality of battery modules 2 can be positioned by strength member 500.

In battery pack 1 according to the first embodiment of the present technology, since strength member 500 that positions battery modules 2 is fixed to housing 400, battery modules 2 can be precisely positioned with respect to housing 400.

Hereinafter, battery packs according to modifications of the first embodiment of the present technology will be described. Since configurations of strength member and end plates of each of the battery packs according to the present modifications are different from those of battery pack 1 according to the first embodiment of the present technology, the same configurations as those of battery pack 1 according to the first embodiment of the present technology will not be described repeatedly.

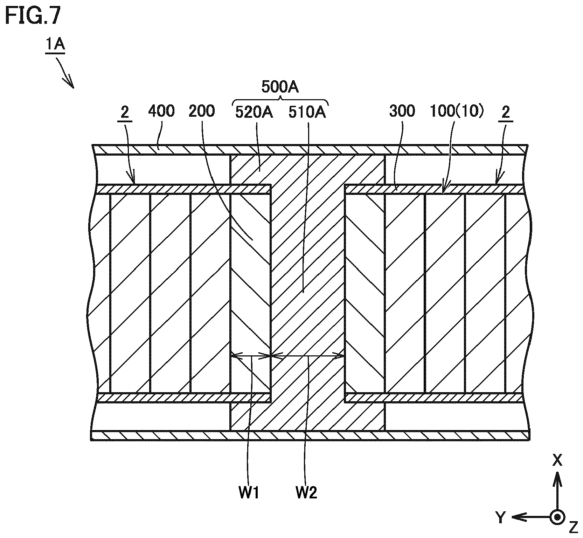

Fig. 7 is a cross sectional view showing a configuration of a battery pack according to a first modification of the first embodiment of the present technology. As shown in Fig. 7, a battery pack 1A according to the present modification includes battery modules 2, a housing 400, and a strength member 500A. Strength member 500A includes a first portion 510A and second portions 520A.

In the first direction (Y direction), a width W2 of first portion 510A is larger than a width W1 of end plate 200. Thus, when battery pack 1A receives a collision load, a ratio of the collision load borne by strength member 500A is larger than a ratio of the collision load borne by end plate 200.

In battery pack 1A according to the first modification of the first embodiment of the present technology, larger part of the collision load is borne by strength member 500A than by end plate 200, thereby reducing a load on battery module 2 due to the collision load.

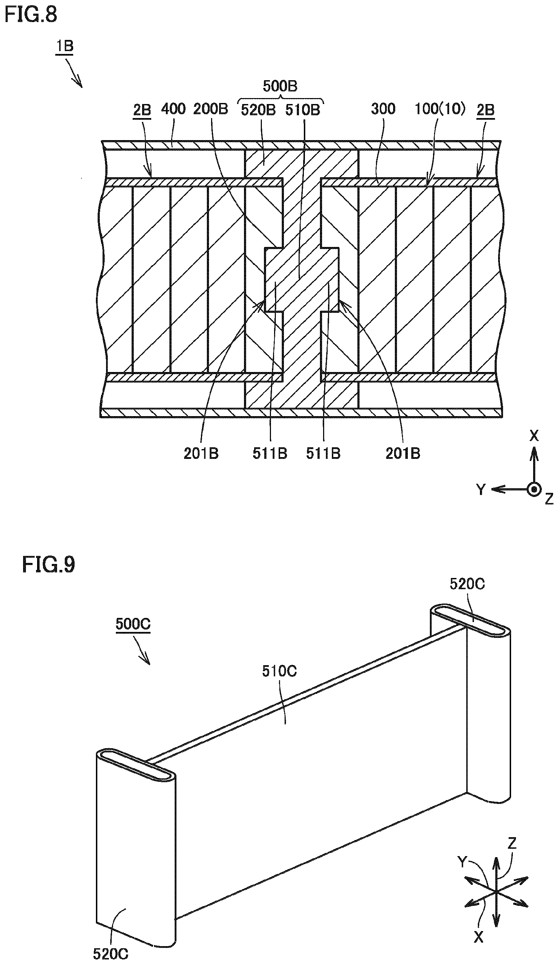

Fig. 8 is a cross sectional view showing a configuration of a battery pack according to a second modification of the first embodiment of the present technology. As shown in Fig. 8, a battery pack 1B according to the present modification includes battery modules 2B and a strength member 500B. Each of battery modules 2B includes an end plate 200B. Strength member 500B includes a first portion 510B and second portions 520B.

A recess 201B is provided in end plate 200B at the center in the second direction (X direction) so as to face first portion 510B. First portion 510B is provided with a protrusion 51 1B at a position corresponding to recess 201B. Protrusion 51 1B is fitted to recess 201B.

In battery pack 1B according to the second modification of the first embodiment of the present technology, since protrusion 511B of first portion 510B is fitted to recess 201B of end plate 200B, strength member 500B can be firmly fitted to end plate 200B by first portion 510B and second portions 520B. Thus, end plate 200B and strength member 500B can be integrally formed, thereby improving proof stress of each of end plate 200B and strength member 500B against the collision load.

### (Second Embodiment)

Hereinafter, a battery pack according to a second embodiment of the present technology will be described. Since a configuration of a strength member of the battery pack according to the second embodiment of the present technology is different from that of battery pack 1 according to the first embodiment of the present technology, the same configurations as those of battery pack 1 according to the first embodiment of the present technology will not be described repeatedly.

Fig. 9 is a perspective view showing the configuration of the strength member included in the battery pack according to the second embodiment of the present technology. As shown in Fig. 9, the battery pack according to the second embodiment includes a battery module, a housing, and a strength member 500C.

Strength member 500C includes a first portion 510C and second portions 520C. Each of second portions 520C is formed by a pipe having an axial direction in the third direction (Z direction). First portion 510C and second portion 520C are joined together by welding, for example.

In the battery pack according to the second embodiment of the present technology, since second portion 520C of strength member 500C is constituted of the pipe, strength member 500C can be manufactured inexpensively.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery pack (1) comprising:
a stack (10) including a plurality of battery cells (100) arranged side by side in a first direction;
an end plate (200) disposed at an end portion of the stack (10) in the first direction;
a housing (400) that accommodates the stack (10) and the end plate (200); and
a strength member (500) disposed inside the housing (400) and fitted to the end plate (200), the strength member (500) bearing at least part of a collision load received by the battery pack (1) at a time of collision, wherein
the strength member (500) includes
a first portion (510) disposed on a side of the end plate (200) opposite to the stack (10) in the first direction, and
a second portion (520) arranged side by side with the end plate (200) and the housing (400) in a second direction orthogonal to the first direction.

2. The battery pack (1) according to claim 1, wherein the second portion (520) is disposed on each of both sides beside each of the end plate (200) and the first portion (510) in the second direction.

3. The battery pack (1) according to claim 2, wherein both sides of the end plate (200) in the second direction are fitted to the second portion (520).

4. The battery pack (1) according to any one of claims 1 to 3, wherein a width (W2) of the first portion (510) is larger than a width (W1) of the end plate (200) in the first direction.

5. The battery pack (1) according to any one of claims 1 to 4, wherein the end plate (200) is in contact with the first portion (510).

6. The battery pack (1) according to any one of claims 1 to 5, wherein the strength member (500) is fixed to the housing (400).

7. The battery pack (1) according to any one of claims 1 to 6, wherein the second portion (520C) is formed by a pipe having an axial direction in a third direction orthogonal to the first direction and the second direction.
